# EUROPEAN PATENT APPLICATION

(11) **EP 4 717 433 A1**
(43) Date of publication of application: **01.04.2026**
(21) Application number: 24811045.4
(22) Date of filing: 17.05.2024
(51) Int. Cl.: B29C 45/76, B29C 45/84

(54) **PLASTICIZATION CONTROL METHOD AND DEVICE FOR INJECTION MOLDING MACHINE**

(30) Priority: 22.05.2023 JP 2023083725
(71) Applicant: Nissei Plastic Industrial Co., Ltd., Hanishina-gun, Nagano 389-0693 (JP)
(72) Inventor: MURATA, Hirofumi, Hanishina-gun, Nagano 389-0693 (JP); OGIWARA, Haruo, Hanishina-gun, Nagano 389-0693 (JP); KASUGA, Nobukazu, Hanishina-gun, Nagano 389-0693 (JP); AOKI, Hidefumi, Hanishina-gun, Nagano 389-0693 (JP); KIKUCHI, Hideki, Hanishina-gun, Nagano 389-0693 (JP); IKEDA, Masataka, Hanishina-gun, Nagano 389-0693 (JP); YODA, Yoshino, Hanishina-gun, Nagano 389-0693 (JP)
(74) Representative: Haseltine Lake Kempner LLP
(86) International application number: PCT/JP2024/018268
(87) International publication number: WO 2024/242038

(57) **Abstract**

Provided is a plasticization control method for an injection molding machine M which has a plasticization step (Sa) of performing a plasticization process for plasticizing a molding material fed into a heating cylinder 2 by controlling rotation of a screw 3 inserted into the heating cylinder 2 and which performs molding by injecting the plasticized molten resin to fill a predetermined mold assembly 70 by controlling advancement of the screw 3. In the method, at least a torque target value Ts for screw rotational torque T and an upper limit value Ru for screw rotational speed R are set beforehand as molding conditions, and, during the plasticization process, the rotation of the screw 3 is controlled while preferential control on the torque target value Ts is performed.

## Description

### Technical Field

The present invention relates to a plasticization control method and apparatus for an injection molding machine which involves a plasticization step for plasticizing a molding material fed into a heating cylinder by controlling rotation of a screw inserted into the heating cylinder.

### Background Art

Conventionally, there has been widely used an injection molding machine which involves a plasticization step for plasticizing a molding material fed into a heating cylinder by controlling rotation of a screw inserted into the heating cylinder and in which the plasticized molten resin is injected into a predetermined mold by controlling advancement of the screw to fill the mold with the molding material, whereby molding is performed. In particular, each of an injection molding machine control method described in Patent Document 1 and a metering control method for an injection molding machine described in Patent Document 2 has been known as a plasticization control method in an injection molding machine.

An object of the control method described in Patent Document 1 is to appropriately stop both the rotation and retraction of a screw when metering ends, thereby securing high metering accuracy for uniformization of resin density. Specifically, in the control method, there are previously set a target stop position, which is obtained by adding a predetermined distance to a screw rotation stopping position, and a rotation speed pattern, in accordance with which the screw is rotated. During metering, the position of the screw is detected at predetermined time intervals, and a remaining rotation speed pattern for stopping the rotation of the screw at the target stop position is predicted from the detected screw position by computation. Subsequently, rotation of the screw is controlled in accordance with the predicted rotational speed pattern. When the screw reaches a screw rotation stopping position, rotation stopping control for the screw is performed, and, when the retraction speed of the screw becomes a predetermined speed set beforehand, retraction stopping control for the screw is performed.

The metering control method described in Patent Document 2 is used to mold super engineering plastics or the like by using an injection molding machine having a small injection capacity, and an object of the metering control method is to secure normal metering operation, thereby improving molding quality and increasing productivity. In the metering control method, an upper limit value and/or a lower limit value is set beforehand for the retraction speed (metering time) of an injection screw during metering, and the retraction speed (metering time) of the injection screw is detected during metering. When the detected retraction speed (metering time) deviates beyond the upper limit value and/or the lower limit value, the rotation of the injection screw is stopped for a set time; specifically, a time set for eliminating the insufficiency of plasticization of the molding material, and, then, the injection screw is rotated again.

### Prior Art Publications

### Patent Publications

Patent Document 1: JP2007-118406A
Patent Document 2: JPH10-24468A

### Disclosure of the Invention

### Problem to be Solved by the Invention

However, the plasticization control methods in the conventional injection molding machines as described above have the following problems to be solved.

Namely, in a plasticization step, a molding material in the form of, for example, pellets is usually fed from a hopper into a heated heating cylinder, and the rotation of a screw inserted into the heating cylinder is controlled so as to plasticize the molding material. In this case, an appropriate number of revolutions (rotational speed) is set for the screw rotational speed, and the rotational speed of the screw is controlled to be maintained at a constant speed so as to realize uniform plasticization. Notably, the rotational speed may be set such that the rotational speed changes stepwise.

Incidentally, the molding material in the heating cylinder is plasticized by the heated heating cylinder and is sheared as a result of rotation of the screw. Therefore, depending on the type of the molding material, the heating state of the molding material during the plasticization process changes greatly in some cases.

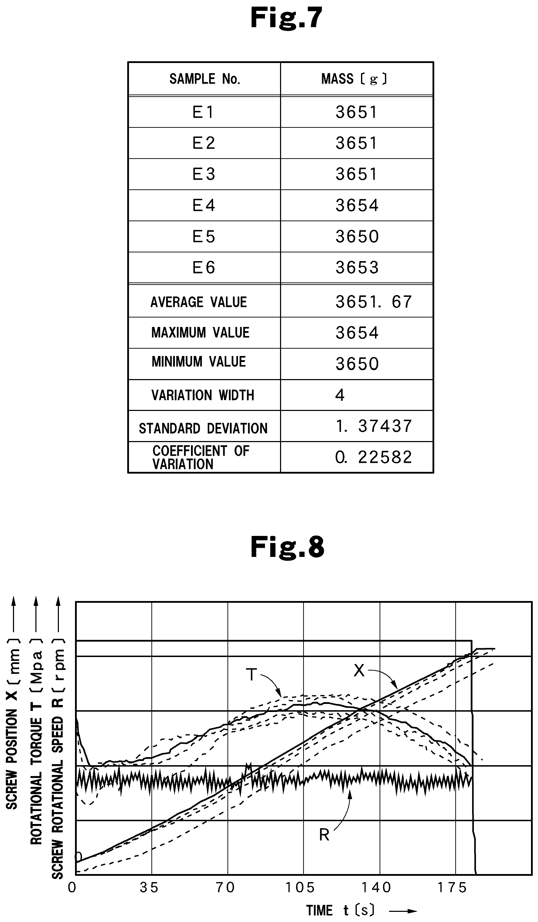

For example, in the case of a powdery resin material, the molding material itself easily absorbs moisture because of its powdery form. In addition, the powdery resin material has a nature of being unlikely to follow the rotation of the screw and a nature of not being easily plasticized, because of great changes in shearing pressure. As is apparent from Fig. 8, which shows a conventional operating state during the plasticization process, the screw rotational speed R is controlled to be constant such that the screw rotational speed R is maintained at the set rotational speed, and the screw rotational torque T changes greatly. In addition, Fig. 8 shows that the degree (width) of variation of the change is large, and the screw retraction position X also varies greatly.

In the case where the shearing pressure increases, since the amount of shear generated heat increases and its degree of variation also increases, the state of plasticization of the molten resin within the heating cylinder also varies more greatly, which lowers the quality of the molten resin in terms of plasticization. As a result, there has been a drawback of increasing the degree of variation in mass of molded products, and lowering molding quality; in particular, in the case of use of a powdery resin material, discoloration, yellowing, fading, etc. of molded products are likely to occur.

An object of the present invention is to provide a plasticization control method and a plasticization control apparatus for an injection molding machine which have solved the problems of the background art techniques.

### Means for Solving the Problem

A plasticization control method for an injection molding machine M according to the present invention is a plasticization control method for an injection molding machine M which has a plasticization step (Sa) of performing a plasticization process for plasticizing a molding material fed into a heating cylinder 2 by controlling rotation of a screw 3 inserted into the heating cylinder 2 and which performs molding by injecting the plasticized molten resin to fill a predetermined mold assembly 70 by controlling advancement of the screw 3.

In order to solve the above-described problem, the plasticization control method includes: setting at least a torque target value Ts for screw rotational torque T and an upper limit value Ru for screw rotational speed R beforehand as molding conditions; and controlling the rotation of the screw 3 during the plasticization process while performing preferential control on the torque target value Ts.

A plasticization control apparatus 1 for an injection molding machine M according to the present invention is a plasticization control apparatus including a molding machine controller which performs a plasticization process for plasticizing a molding material fed into a heating cylinder 2 by controlling rotation of a screw 3 inserted into the heating cylinder 2 and which performs molding by injecting the plasticized molten resin to fill a predetermined mold assembly 70 by controlling advancement of the screw 3.

In order to solve the above-described problem, the plasticization control apparatus 1 includes the molding machine controller 10 which comprises: a molding condition setting function section Fs which sets at least a torque target value Ts for screw rotational torque T and an upper limit value Ru for screw rotational speed R as molding conditions; and a plasticization control function section Fc which controls rotation of the screw 3 during the plasticization process while performing preferential control on the torque target value Ts.

In addition, in a preferred mode of the present invention in which the plasticization control method of the present invention is carried out, it is desired that a powdery resin material is contained in the molding material. Notably, it is possible to monitor the rotation state of the screw 3 when the screw 3 rotates in the plasticization step (Sa), and to perform an error process when the screw 3 suffers a rotation anomaly. In this case, the rotation anomaly may include a state in which the screw rotational speed R is lower than a lower limit value set for the screw rotational speed R. Moreover, when the plasticization control apparatus 1 is configured, it is desired to provide a display 11 in the molding machine controller 10 and provide a plasticization state display function section Fd which causes the display 11 to graphically display, by a graphic display section 11g, data representing changes in one or two or more physical quantities selected from at least screw position X, screw rotational torque T, and screw rotational speed R during the plasticization process. In addition, a graphic display changing function section Fm may be provided. The graphic display changing function section Fm can operate the plasticization state display function section Fd and a normal display function section Fn selectively through switching or operate them simultaneously. The normal display function section Fn graphically displays, by a normal waveform display section 11n, data representing changes in one or two or more physical quantities selected from at least injection speed V, injection pressure Pp, and mold assembly parting opening amount Lm during the molding.

### Effects of the Invention

The plasticization control method and the plasticization control apparatus 1 for the injection molding machine M according to the present invention achieve remarkable effects as described below.
(1) At least the torque target value Ts for the screw rotational torque T and the upper limit value Ru for the screw rotational speed R are set beforehand as molding conditions, and, during the plasticization process, the rotation of the screw 3 is controlled, while preferential control on the torque target value Ts is performed. Therefore, it is possible to solve the problem that shearing pressure becomes excessively large in the plasticization step (Sa), thereby suppressing generation of unnecessary shearing heat and consequently suppressing variation of the shearing pressure. As a result, it is possible to improve the quality of molten resin. In particular, it is possible to significantly improve the molding quality by preventing occurrence of discoloration, yellowing, fading, etc. of molded products.
(2) In a preferred mode in which the plasticization control method is carried out, a powdery resin material is contained in the molding material. It is said that a powdery resin material has a nature of being unlikely to follow the rotation of the screw 3 and a nature of being highly hygroscopic, and therefore, the quality of the material easily deteriorates. However, since the controllability of plasticization control (moldability) of the powdery resin material can be enhanced, it is possible to prevent occurrence of discoloration, yellowing (in particular, yellowing of white products), fading, etc. of products molded by using a powdery resin material, thereby greatly improving molding quality.
(3) In a preferred mode, the rotation state of the screw 3 is monitored when the screw 3 rotates in the plasticization step (Sa), and, when the screw 3 suffers a rotation anomaly, an error process is performed. In this case, even when a harmful effect occurs as a result of limiting the screw rotational torque T, it is possible to perform an error process which is appropriate for the harmful effect.
(4) In a preferred mode, the state in which the screw rotational speed R becomes lower than a lower limit value set for the screw rotational speed R is contained in the rotation anomaly of the screw 3. In this case, it is possible to perform an error process which is appropriate, in particular, for harmful effects such as the screw 3 becoming unable to rotate due to limitation of the screw rotational torque T.
(5) In a preferred mode, when the plasticization control apparatus 1 is configured, the display 11 is provided in the molding machine controller 10, and the plasticization state display function section Fd is provided for the display 11. The plasticization state display function section Fd graphically displays, by the graphic display section 11g, data representing changes in one or two or more physical quantities selected from at least screw position X, screw rotational torque T, and screw rotational speed R during the plasticization process. Since the operating state of the heating cylinder 2 can be visualized, an operator can easily and quickly grasp the plasticization state of the molten resin.
(6) In a preferred mode, the graphic display changing function section Fm which can operate the plasticization state display function section Fd and the normal display function section Fn selectively through switching or operate them simultaneously is provided. The normal display function section Fn graphically displays, by the normal waveform display section 11n, data representing changes in one or two or more physical quantities selected from at least injection speed V, injection pressure Pp, and mold assembly parting opening amount Lm during the molding. In this case, since the operating state at the time of injection and the operating state at the time of plasticization can be checked simultaneously or checked by comparing them, it becomes possible to take a preventive measure against a trouble or to accurately grasp the operating state of the entire molding step, which contributes reduction of defective products and enhancement of mass producibility.

### Brief Description of the Drawings

[Fig. 1] Flowchart used for describing an operating state of a plasticization step during production which is performed by using a plasticization control method according to a best embodiment of the present invention.
[Fig. 2] Configurational view of an injection molding machine which can perform the plasticization control method.
[Fig. 3] Block system diagram of control means which can perform the plasticization control method.
[Fig. 4] Illustration showing a screen displayed on a display of a molding machine controller which is used to perform the plasticization control method.
[Fig. 5] Illustration showing a screen which is displayed in a graphic display section in which change data obtained as a result of performance of the plasticization control method are graphically displayed.
[Fig. 6] Illustration showing another screen which is displayed in the graphic display section in which change data obtained as a result of performance of the plasticization control method are graphically displayed.
[Fig. 7] Table showing the mass data of products molded by the plasticization control method.
[Fig. 8] Illustration showing a screen which is displayed in the graphic display section in which change data obtained as a result of performance of a conventional plasticization control method are graphically displayed.
[Fig. 9] Table showing the mass data of products molded by the conventional plasticization control method.
[Fig. 10] Flowchart used for describing the processing procedure of a pre-filling step during production which is performed by using the plasticization control method according to the best embodiment of the present invention.
[Fig. 11] Flowchart used for describing the processing procedure of a filling-molding step during production which is performed by using the plasticization control method.
[Fig. 12] Screen illustration showing a screen relating to a modification and displayed on the display of the molding machine controller which is used to perform the plasticization control method.

### Brief Description of the Drawings

1: plasticization control apparatus, 2: heating cylinder, 3: screw, 10: molding machine controller, 11: display, 11g: graphic display section, 11n: normal waveform display section, M: injection molding machine, (Sa): plasticization step, 70: mold assembly, T: screw rotational torque, Ts: torque target value, R: screw rotational speed, Ru: upper limit value, Fs: molding condition setting function section, Fc: plasticization control function section, Fd: plasticization state display function section, Fn: normal display function section, Fm: graphic display changing function section

### Best Mode for Carrying Out the Invention

Next, the best embodiment of the present invention will be described in detail based on the drawings.

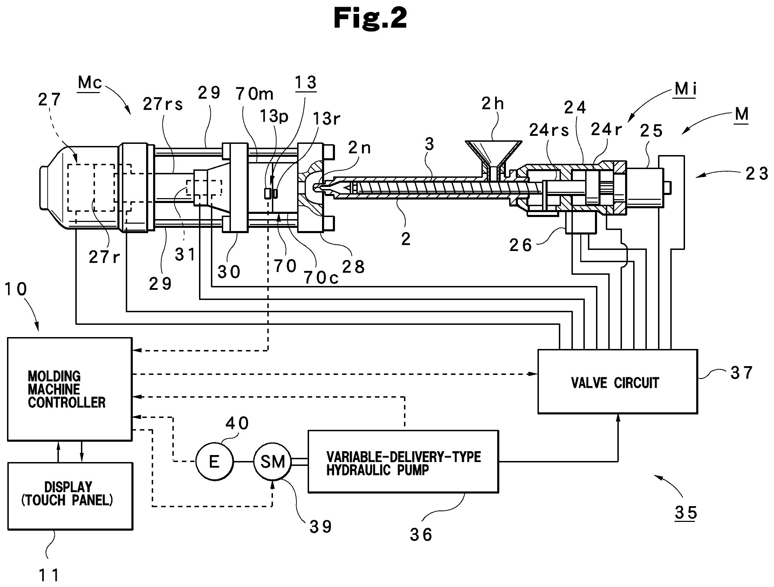

First, the overall structure of a main portion of an injection molding machine M according to the present embodiment will be described with reference to Fig. 2.

In Fig. 2, M denotes the injection molding machine, which includes an injection device Mi and a mold clamping device Mc. The injection device Mi includes a heating cylinder 2 having an injection nozzle 2n at its forward end and a hopper 2h at its rear portion. A screw 3 is inserted into an internal space of the heating cylinder 2, and a screw drive section 23 is disposed at a rear end of the heating cylinder 2. The screw drive section 23 has an injection cylinder (hydraulic cylinder) 24 including a single-rod-type injection ram 24r. A ram rod 24rs projecting forward from the injection cylinder 24 is coupled to a rear end of the screw 3. A shaft of a plasticization motor (oil motor) 25 attached to the injection cylinder 24 is splined-coupled to a rear end of the injection ram 24r. 26 denotes an injection device moving cylinder which moves the injection device Mi forward and rearward, thereby establishing nozzle touch to a mold assembly 70 or cancelling the nozzle touch. By virtue of this configuration, the injection device Mi can cause the injection nozzle 2n to touch the mold assembly 70 and inject the plasticized molten resin into the cavity of the mold assembly 70 to fill the cavity with the molten resin.

The mold clamping device Mc is a direct-pressure-type hydraulic mold clamping device which moves a movable mold 70m by a drive ram 27r of a mold clamping cylinder (hydraulic cylinder) 27. The mold clamping device Mc includes a movable platen 30 which is slidably mounted on a plurality of tie bars 29 provided to extend between a stationary platen 28 and the mold clamping cylinder 27 whose positions are fixed and which are disposed away from each other. A forward end of a ram rod 27rs projecting forward from the mold clamping cylinder 27 is fixed to the movable platen 30. A stationary mold 70c is attached to the stationary platen 28, and the movable mold 70m is attached to the movable platen 30. The stationary mold 70c and the movable mold 70m constitute the mold assembly 70. By virtue of this configuration, the mold clamping cylinder 27 can perform mold opening/closing and mold clamping for the mold assembly 70.

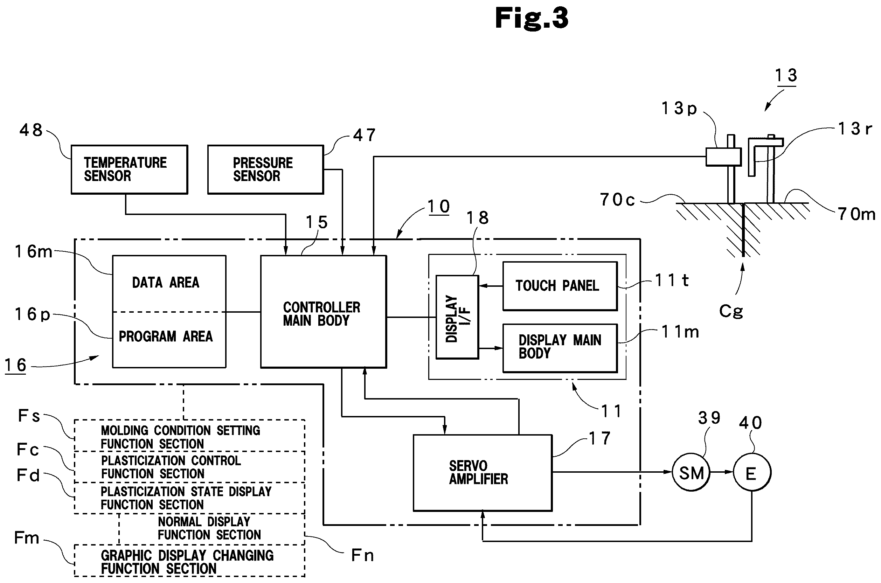

Notably, 13 denotes a distance measurement sensor which has a function of detecting a parting gap Cg generated between the stationary mold 70c and the movable mold 70m. The distance measurement sensor 13, which is shown as an example, is a non-contact type, and, as shown in Fig. 3, includes a projection unit 13p disposed on an outer side surface of the stationary mold 70c and a reflection unit 13r disposed on an outer side surface of the movable mold 70m. By virtue of this configuration, it is possible to project an ultrasonic wave, laser light, etc. (hereinafter referred to as "measurement light") from the projection unit 13p and receive the measurement light reflected by the reflection unit 13r, thereby measuring the distance between the projection unit 13p and the reflection unit 13r; i.e., the parting gap Cg.

Meanwhile, in Fig. 2, 35 denotes a hydraulic circuit which includes a variable-delivery-type hydraulic pump 36 serving as a hydraulic drive source, and a valve circuit 37. The hydraulic pump 36 includes a servo motor 39 which serves as a drive source for rotating the hydraulic pump 36. 40 denotes a rotary encoder for detecting the rotational speed of the servo motor 39.

The discharge port of the hydraulic pump 36 is connected to a primary side of the valve circuit 37. A secondary side of the valve circuit 37 is connected to the injection cylinder 24, the plasticization motor 25, the mold clamping cylinder 27, an ejector cylinder 31 (Fig. 2), and the injection device moving cylinder 26 in the injection molding machine M. Therefore, the valve circuit 37 includes switching valves (electromagnetic valves) which are respectively connected to the injection cylinder 24, the plasticization motor 25, the mold clamping cylinder 27, the ejector cylinder 31, and the injection device moving cylinder 26. Notably, each switching valve is composed of one or two or more valve components, necessary additional hydraulic components, etc. and has a switching function associated with supply of working fluid to at least for the injection cylinder 24, the plasticization motor 25, the mold clamping cylinder 27, the ejector cylinder 31, and the injection device moving cylinder 26, stoppage of the supply of the working fluid, and discharge of the working fluid.

Thus, the discharge flow rate and discharge pressure of the variable-delivery-type hydraulic pump 36 can be changed by variably controlling the rotational speed of the servo motor 39. On the basis of this, it is possible to drive and control the injection cylinder 24, the plasticization motor 25, the mold clamping cylinder 27, the ejector cylinder 31, and the injection device moving cylinder 26 and to control respective operation steps in a molding cycle. In the case where, as described above, the variable-delivery-type hydraulic pump 36 which can set its fixed discharge flow rate by changing its swash plate angle is used, it is possible to set the pump capacity to the fixed discharge flow rate having a predetermined magnitude (the maximum capacity), and change the discharge flow rate and the discharge pressure while using the fixed discharge flow rate as a reference. Thus, the control by the control system can be performed easily and smoothly.

Next, the configuration of the plasticization control apparatus 1 of the injection molding machine M according to the present embodiment will be described with reference to Figs. 2 to 6.

The plasticization control apparatus 1 includes a molding machine controller 10 shown in Fig. 2. A controller main body 15, a display 11, an internal memory 16, and a servo amplifier 17, which are shown in Fig. 3, are contained in the molding machine controller 10.

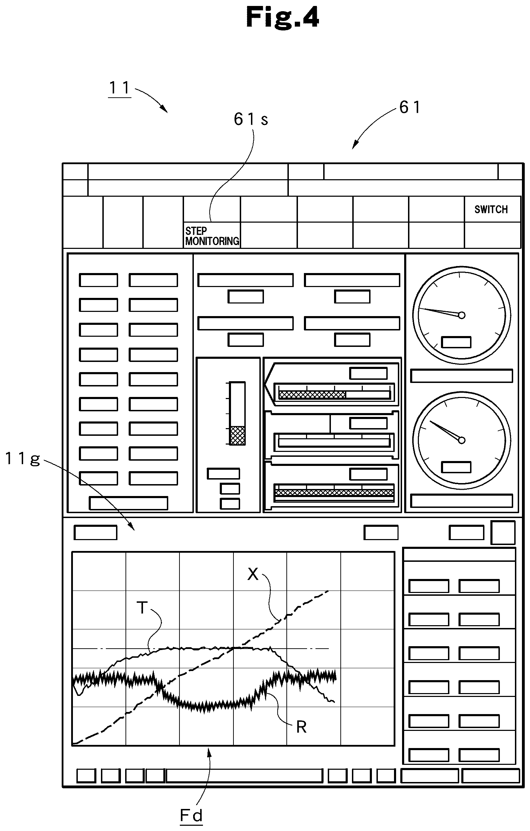

The controller main body 15 includes hardware such as a CPU, etc. and provides a computer function. The display 11 includes a display main body 11m and a touch panel 11t attached to the display main body 11m. The display main body 11m and the touch panel 11t are connected to the controller main body 15 via a display interface 18. Accordingly, various setting operations, selecting operations, etc. can be performed by using this touch panel 11t. The display 11 provides various types of displays; in particular, displays a step monitoring screen 61 shown in Fig. 4, in relation to the plasticization control method according to the present embodiment. This step monitoring screen 61 can be displayed by selecting a step monitoring screen switching key 61s.

As shown in Fig. 4, the step monitoring screen 61 has a graphic display section 11g in which data representing changes in various operation-related physical quantities are graphically displayed. Data representing changes in one or two or more physical quantities selected from at least the screw position X, the screw rotational torque T, and the screw rotational speed R during the plasticization process are sent from the controller main body 15 and are graphically displayed in the graphic display section 11g. This display function constitutes a plasticization state display function section Fd.

As described above, when the plasticization control apparatus 1 is configured, the display 11 is provided in the molding machine controller 10, and the plasticization state display function section Fd is provided for the display 11. The plasticization state display function section Fd causes the display 11 to graphically display, by the graphic display section 11g, data representing changes in one or two or more physical quantities selected from at least the screw position X, the screw rotational torque T, and the screw rotational speed R during the plasticization process. Since the operating state of the heating cylinder 2 can be visualized, an operator can easily and quickly grasp the plasticization state of the molten resin.

Furthermore, the internal memory 16 has a program area 16p for storing various types of programs, including control programs (software) for executing various types of computation processing and various types of control processing (sequence control), and a data area 16m in which various types of data (database) can be stored. In particular, a control program (sequence control program) for performing a plasticization process by the plasticization control method according to the present embodiment is contained in the programs.

The above-described servo motor 39 is connected to an output section of the servo amplifier 17, and the rotary encoder 40 is connected to an encoder pulse input section of the servo amplifier 17. Also, as shown in Fig. 2, the above-described valve circuit 37 is connected to a control signal output port of the molding machine controller 10. A pressure sensor 47 for detecting oil pressure and a temperature sensor 48 for detecting oil temperature, which are shown in Fig. 3, are provided on the primary side of the valve circuit 37, and the pressure sensor 47 and the temperature sensor 48 are connected to the controller main body 15. Furthermore, the projection unit 13p of the distance measurement sensor 13 is connected to a sensor port of the controller main body 15.

By virtue of this, the molding machine controller 10 functions as various function sections for realizing the plasticization control method according to the present embodiment. Basically, as shown in Fig. 3, the molding machine controller 10 functions as a molding condition setting function section Fs, a plasticization control function section Fc, a plasticization state display function section Fd, a normal display function section Fn, and a graphic display changing function section Fm.

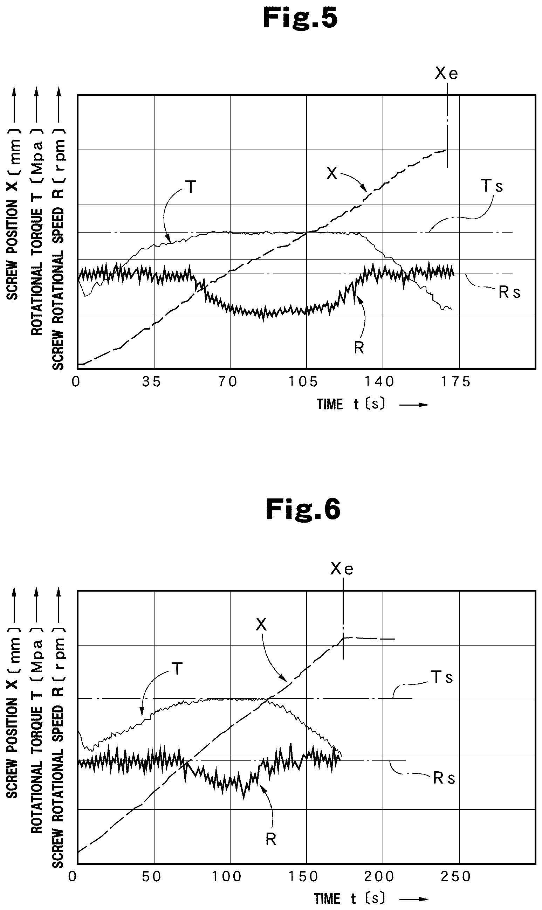

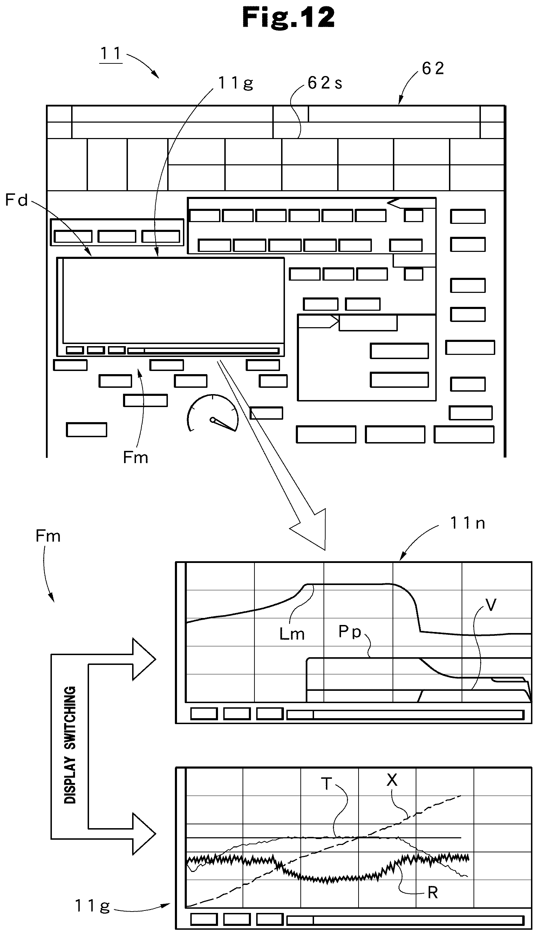

As shown in FIG. 5, the molding condition setting function section Fs has a function of setting, as molding conditions, at least a torque target value Ts for the screw rotational torque T and an upper limit value Ru of the screw rotational speed R. The plasticization control function section Fc has a function of controlling rotation of the screw 3 during the plasticization process while performing preferential control on the torque target value Ts. The plasticization state display function section Fd has a function of causing the display 11 to graphically display, by the graphic display section 11g, data representing changes in one or two or more physical quantities selected from at least the screw position X, the screw rotational torque T, and the screw rotational speed R during the plasticization process, as shown in Fig. 4. The normal display function section Fn has a function of causing the display 11 to graphically display data representing changes in one or two or more physical quantities selected from at least injection speed V, injection pressure Pp, and mold parting opening amount Lm during the molding, as shown in Fig. 12. The graphic display changing function section Fm has a function of operating the normal display function section Fn and the plasticization state display function section Fd selectively through switching or in combination (i.e., simultaneously), as shown in Fig. 12 as a modification.

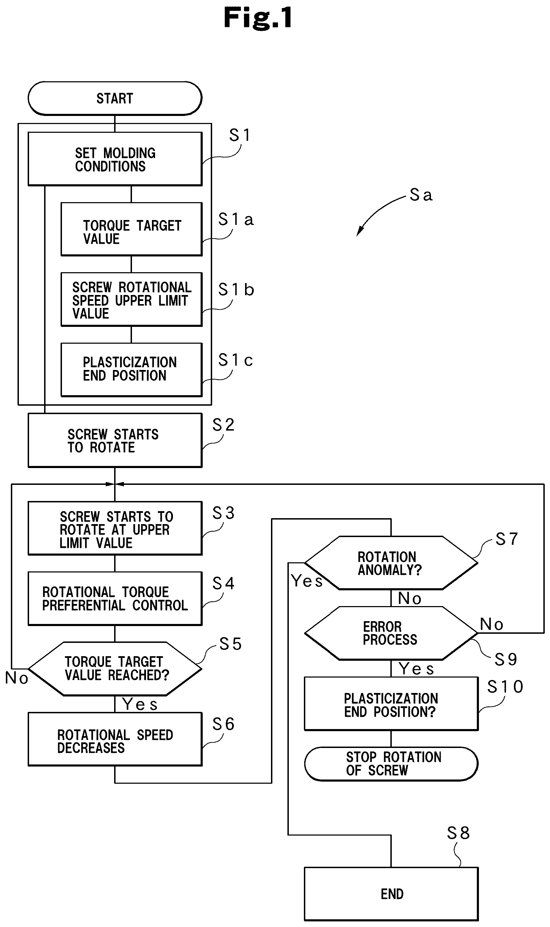

Next, operation of the injection molding machine M, including the plasticization control method according to the present embodiment, will be specifically described with reference to Figs. 1 to 11.

First, the principle of the plasticization control method according to the present embodiment; namely, the results of a test performed so as to verify the effectiveness of the plasticization control method, will be described with reference to Figs. 5 to 9.

In the verification test, powdery, white hard PVC (polyvinyl chloride) (resin material) was used as a molding material. It is said that a powdery resin material has a nature of being unlikely to follow rotation of the screw 3 and a nature of being highly hygroscopic, and therefore, the quality of the material easily deteriorates. However, in the case of the plasticization control method according to the present embodiment, since the controllability of plasticization control (moldability) of the powdery resin material can be enhanced, it is possible to prevent occurrence of discoloration, yellowing (in particular, yellowing of white products), fading, etc. of products molded by using a powdery resin material, thereby greatly improving molding quality. Sample molded products were large cap members.

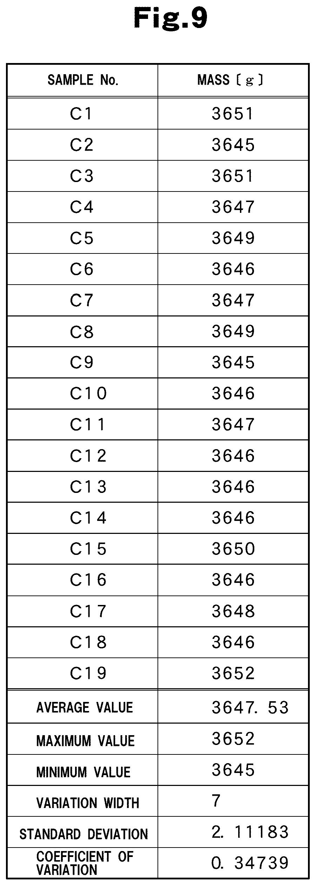

Figs. 8 and 9 show data obtained when a plasticization step was performed from a plasticization start position to a predetermined plasticization end position Xe while being controlled by a conventional control method such that the screw 3 rotates at a screw rotational speed R [rpm] (for example, 40 [rpm]) set for the screw 3. Fig. 8 is an illustration showing a screen in which the obtained change data are graphically displayed, and Fig. 9 is a table showing data representing the masses [g] of molded products. As shown in Fig. 8, the screw rotational speed R is maintained at an approximately constant speed during the process of the plasticization step, and the screw position X shows a state in which the screw 3 retreats approximately proportionally with elapse of time. Meanwhile, the screw rotational torque T gradually increases from the plastination start time and then gradually decreases as represented by an arc-like curve.

As shown in Fig. 9, the number of samples used in the verification test was 19, and data representing changes in the screw position X, the screw rotational torque T, and the screw rotational speed R related to samples randomly selected from the 19 samples were shown in Fig. 8 as change data. As is apparent from Figs. 8 and 9, in the case where the conventional plasticization control method is used, the screw rotational torque T is likely to increase excessively, and its variation becomes large. As shown in Fig. 9, in the case of products having a standard mass of 3650 [g], the average value was "3647.53 [g]," the maximum value was "3652 [g]," the minimum value was "3645 [g]," the variation width was "7 [g]," the standard deviation was "2.11183 [g]," and the coefficient of variation was "0.34739."

Meanwhile, in the plasticization control method according to the present embodiment, a torque target value Ts (for example, 20 [MPa]) is set for the screw rotational torque T and an upper limit value Ru (for example, 40 [rpm]) is set for the screw rotational speed R beforehand, and, during the plasticization process, the rotation of the screw 3 is controlled, while preferential control on the torque target value Ts is performed.

Figs. 5 and 7 show data obtained in the case where a plasticization step was performed by using the plasticization control method according to the present embodiment. Fig. 5 is an illustration showing a screen in which the obtained change data are graphically displayed, and Fig. 7 is a table showing data representing the masses [g] of molded products. As shown in Fig. 5, at the beginning, the screw continues its rotation at the upper limit value Rs, and the screw rotational torque T gradually increases from the start of plasticization as in the case where the conventional control method is performed. When the screw rotational torque T reaches the torque target value Ts, the screw rotational torque T is limited to the torque target value Ts. As a result of performance of the control of limiting the screw rotational torque T to the torque target value Ts, the screw rotational speed R decreases. Subsequently, the screw rotational speed R gradually increases, and, when the screw rotational speed R reaches the upper limit value Rs, the screw rotational speed R is maintained at the upper limit value Rs. As a result, the screw rotational torque T changes; i.e., gradually decreases.

As shown in Fig. 7, the number of samples used in the verification test was 6, and data representing changes in the screw position X, the screw rotational torque T, and the screw rotational speed R related to one sample randomly selected from the 6 samples were shown in Fig. 5 as change data. As is apparent from Figs. 5 and 7, in the case where the plasticization control method of the present embodiment is used, the screw rotational torque T is limited to the torque target value Ts and does not increase beyond the torque target value Ts. As shown in Fig. 7, in the case of products having a standard mass of 3650 [g], the average value was "3651.67 [g]," the maximum value was "3654 [g]," the minimum value was "3650 [g]," the variation width was "4 [g]." the standard deviation was "1.37437 [g]," and the coefficient of variation was "0.22582." From this, it was confirmed that stable molding with small variation is possible.

Namely, superiority (effectiveness) of the plasticization control method according to the present embodiment over the conventional control method was confirmed. In particular, in the case of white molded products, yellowing was noticeable overall when the conventional control method was used, but discoloration due to yellowing hardly occurred when the plasticization control method according to the present embodiment was used. Notably, although Fig. 6 is an illustration showing a graphic display similar to Fig. 5, Fig. 6 shows an example case of use of a molding material which causes a relatively small increase in the screw rotational torque T.

Next, a specific processing procedure at the time of production in which the plasticization control method according to the present embodiment is used will be described in accordance with flowcharts shown in Figs. 1, 10, and 11 and with reference to the drawings.

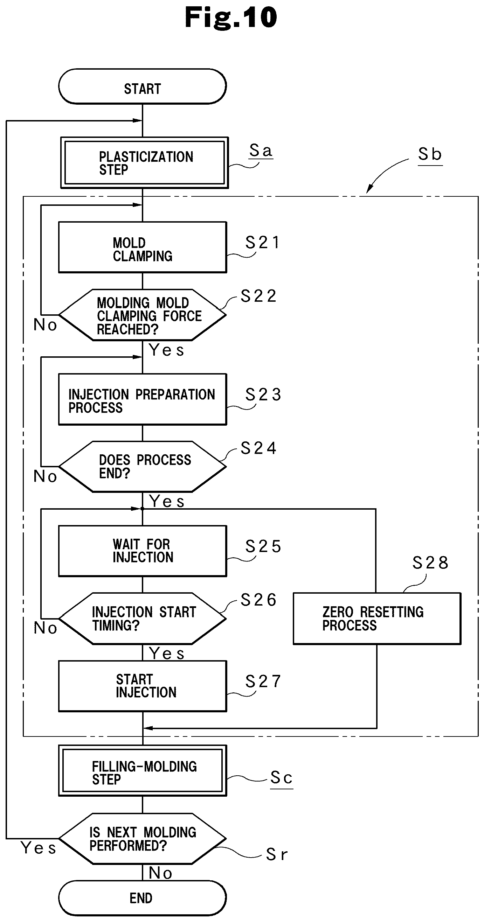

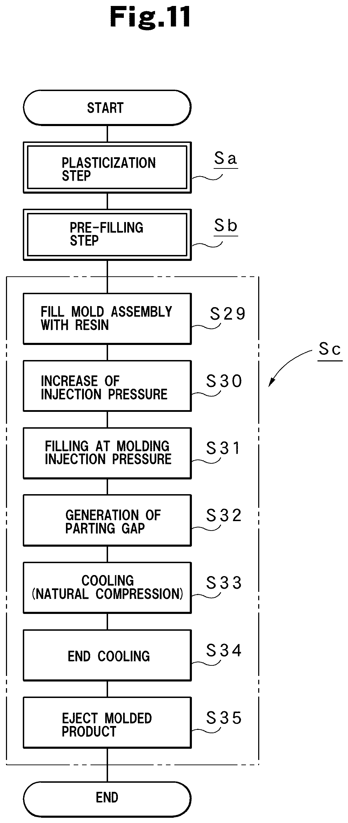

Fig. 1 shows a plasticization step Sa at the time of production, Fig. 10 shows a pre-filling step Sb from preparation of injection to start of injection, and Fig. 11 shows a filling-molding step Sc from start of filling to ejection of a molded product.

As shown in Fig. 10, a plasticization step is first performed (step Sa). This plasticization step (step Sa) is performed on the basis of the plasticization control method according to the present embodiment. The specific processing procedure of the plasticization step is shown by the flowchart of Fig. 1.

In the plasticization step, molding conditions corresponding to the plasticization step are set beforehand (step S1). In this case, setting of the molding conditions includes at least setting associated with the plasticization control method according to the present embodiment (i.e., setting the torque target value Ts [MPa] for the screw rotational torque T (S1a), setting the upper limit value Ru [rpm] for the screw rotational speed R (S1b), and setting of the plasticization end position Xe [mm] (S1c)) and various setting necessary for resin molding such as temperature, back pressure, etc. These settings can be performed by the molding condition setting function section Fs.

Meanwhile, in the plasticization step, the plasticization process is performed on the basis of the plasticization control function section Fc. First, by switching the valve circuit 37 and controlling the servo motor 39, the plasticization motor 25 in the injection device Mi is activated so that the screw 3 starts to rotate (step S2). In an initial stage, although the molding material is heated by the heated heating cylinder 2, the molding material is hardly sheared by the rotating screw 3, and therefore, the screw 3 rotates such that the screw rotational speed R coincides with the upper limit value Ru (step S3).

In addition, in the plasticization step, the plasticization state display function section Fd causes the display 11 shown in Fig. 4 to graphically display, in the graphic display section 11g, data representing changes in one or two or more physical quantities selected from at least the screw position X, the screw rotational torque T, and the screw rotational speed R during the plasticization process. Figs. 5 and 6 are enlarged views of the graphic display section 11g extracted. Since the molding material is gradually sheared as a result of progress of the rotation of the screw 3, as shown in Figs. 5 and 6 described above, the screw rotational torque T gradually increases from a near-zero value. In this case, preferential control is performed on the screw rotational torque T (step S4).

Accordingly, when the screw rotational torque T reaches the set torque target value Ts, a control process for maintaining the screw rotational torque T at the torque target value Ts is performed. As a result, the screw rotational speed R gradually decreases such that the screw rotational torque T is maintained at the torque target value Ts (steps S5 and S6). At that time, the rotation state of the screw 3 is monitored, and, when the rotation of the screw 3 becomes anomalous, an error process is performed (steps S7 and S8). By virtue of such monitoring, even when a harmful effect occurs as a result of limiting the screw rotational torque T, it is possible to perform an error process which is appropriate for the harmful effect. In this case, a state in which the screw rotational speed R becomes lower than a lower limit value set for the screw rotational speed R is contained in the rotation anomaly of the screw 3, it is possible to perform an error process which is appropriate, in particular, for harmful effects such as the screw 3 becoming unable to rotate due to limitation of the screw rotational torque T.

When the plasticization process proceeds and the screw 3 reaches the plasticization end position Xe set beforehand, rotation of the screw 3 is stopped (steps S9 and S10). As a result, the plasticization step Sa ends.

Notably, in the plasticization step employed this time, unlike a generally used molding method, a precise metering step of accurately metering the resin is not performed. Namely, since, it is merely required in the injection step to perform injection operation until the cavity is filled with the resin, in the metering step, it is sufficient to meter the resin more than necessary. Accordingly, although metering operation as in a generally employed metering step is performed, metering control for accurately metering the molding material is unnecessary.

In the plasticization control method (the plasticization control apparatus 1) according to the present embodiment, basically, at least the torque target value Ts for the screw rotational torque T and the upper limit value Ru for the screw rotational speed R are set beforehand as molding conditions, and, during the plasticization process, the rotation of the screw 3 is controlled, while preferential control on the torque target value Ts is performed. Therefore, it is possible to solve the problem that shearing pressure becomes excessively large in the plasticization step, thereby suppressing generation of unnecessary shearing heat and to suppress variation of the shearing pressure. As a result, it is possible to improve the quality of molten resin. In particular, it is possible to significantly improve the molding quality by preventing occurrence of discoloration, yellowing, fading, etc. of molded products.

Meanwhile, in Fig. 10, upon completion of the plasticization step Sa, the pre-filling step Sb relating to preparation of injection is performed. In this case, by switching the valve circuit 37 and controlling the servo motor 39, the mold clamping cylinder 27 of the mold clamping device Mc is driven so as to perform mold clamping for the mold assembly 70 such that the mold clamping force becomes equal to a molding mold clamping force set beforehand (steps S21 and S22).

Upon completion of the mold clamping, a process relating to the preparation of injection is performed (step S23). Nozzle touch by nozzle touch operation and control for mold temperature are included in this process. In the nozzle touch operation, the injection device moving cylinder 26 is driven and controlled, whereby the injection device Mi moves forward and its nozzle comes into touch with the mold assembly 70. The process of controlling the mold temperature is performed such that the mold temperature having changed due to mold opening returns to a regular temperature set beforehand. Upon completion of these processes relating to the preparation of injection, the injection device Mi enters an injection waiting state (steps S24 and S25).

When an injection start time then has come, the injection cylinder 24 of the injection device Mi is driven so as to inject the resin into the mold assembly 70 (steps S26 and S27). In this case, it is sufficient to advance the screw 3 by rated operation. Notably, in the molding machine controller 10, after the injection device Mi has entered the injection waiting state, the determination as to whether or not a resetting timing set beforehand has come is made through monitoring, and, when the resetting timing has come, a zero-resetting process of zero-resetting the distance measurement sensor 13 is performed (step S28).

Upon completion of the pre-filling step Sb as described above, the filling-molding step Sc is performed. A specific processing procedure of the filling-molding step Sc is shown by a flowchart in Fig. 11. When injection is started at the above-described injection start timing, the plasticized molten resin within the heating cylinder 2 is injected into the cavity of the mold assembly 70 to fill the cavity with the molten resin (step S29). As the cavity is filled with the resin, the injection pressure Pp increases. When the injection pressure Pp approaches and reaches a limit pressure, control for maintaining the injection pressure Pp at the limit pressure; i.e., control for preventing overshoot, is performed, whereby the injection pressure Pp is maintained at the limit pressure (molding injection pressure) (steps S30 and S31). Accordingly, in the injection operation, substantially constant pressure control is performed.

As a result of filling the cavity of the mold assembly 70 with the resin, the mold assembly 70 is pressurized by the resin, and a parting gap Cg is generated between the stationary mold 70c and the movable mold 70m (step S32). This parting gap Cg is produced on the basis of the previously set molding mold clamping force and the molding injection pressure.

Upon completion of injection of the resin into the mold assembly 70, solidification of the resin proceeds with elapse of time, and natural compression of the resin occurs as a result of the solidification (step S33). Namely, since the volume decreases due to solidification of the resin, the resin is naturally compressed by a pressing action due to elastic restoration of the mold assembly 70 (in particular, the movable mold 70m) to follow a decrease in the volume. Upon elapse of a cooling time set beforehand, by switching the valve circuit 37 and controlling the servo motor 39, the mold clamping cylinder 27 is driven so as to retract the movable mold 70m, thereby performing mold opening. In addition, by switching the valve circuit 37 and controlling the servo motor 39, the ejector cylinder 31 is driven so as to eject a molded product adhering to the movable mold 70m (steps S34 and S35). As a result, the molded product is taken out, and the filling-molding step Sc ends.

In the case where a next molding process is continuously performed after that, as shown in Fig. 10, the plasticization step Sa, the pre-filling step Sb, and the filling-molding step Sc are repeated similarly (steps Sr, Sa, Sb, Sc ...).

Fig. 12 shows a modification of the plasticization state display function section Fd. In this modification, as shown in Fig. 12, a graphic display changing function section Fm is provided. The graphic display changing function section Fm can operate the plasticization state display function section Fd and the normal display function section Fn selectively through switching or operate them in combination. The normal display function section Fn graphically displays, by a normal waveform display section 11n, data representing changes in one or two or more physical quantities selected from at least the injection speed V, the injection pressure P, and the mold assembly parting opening amount Lm during the molding. By virtue of this configuration, the operator can display the above-described two types of change data in the normal waveform display section 11n of the display 11 selectively through switching or in combination by performing a display switching operation as needed. Namely, data representing changes in one or two or more physical quantities selected from at least the injection speed V, the injection pressure Pp, and the mold assembly parting opening amount Lm during the molding, and data representing changes in one or two or more physical quantities selected from at least the screw position X, the screw rotational torque T, and the screw rotational speed R during the plasticization process can be selectively displayed or displayed in a combined (superimposed) manner. Notably, the normal waveform display section 11n can be displayed by displaying the injection-metering screen 62 by selecting the injection-metering screen switching key 62s. The switching of the display can be performed by using a display switching key (not shown).

In the case where the graphic display section 11g and the normal waveform display section 11n can be displayed selectively or simultaneously as described above, since the operating state at the time of injection and the operating state at the time of plasticization can be checked simultaneously or checked by comparing them, it becomes possible to take a preventive measure against a trouble or to accurately grasp the operating state of the entire molding step, which contributes reduction of defective products and enhancement of mass producibility.

The best embodiment (including modifications) has been described in detail. However, the present invention is not limited to such embodiment, and, as to structures of details, shapes, materials, quantities, methods, etc., alteration, addition, and deletion can be performed arbitrarily within a range not departing from the gist of the present invention.

For example, it is desired that a powdery resin material is contained in the molding material. However, basically, the present invention can be applied to the case where a resin material in the form of pellets is used, and no limitation is imposed on the type of the molding material in terms of shape. Although it is desired to monitor the rotation state of the screw 3 and perform an error process when the screw 3 suffers a rotation anomaly, this is not essential. In addition, it is desired that the state in which the screw rotational speed R becomes lower than the lower limit value set for the screw rotational speed R is contained in the rotation anomaly. However, the case where other rotation anomalies are covered is not excluded. Moreover, there has been shown an example in which data representing changes of all the physical quantities (i.e., the screw position X, the screw rotational torque T, and the screw rotational speed R) during the plasticization process are displayed in the graphic display section 11g of the display 11. However, data representing changes in one or two or more physical quantities selected from the screw position X, the screw rotational torque T, and the screw rotational speed R may be displayed, and the case where data representing changes in other physical quantities are displayed is not excluded. Although an example in which the hydraulic-type injection device Mi is used in the injection molding machine M has been described, a motor-driven type injection device Mi may be used.

### Industrial Applicability

The plasticization control method and the plasticization control apparatus according to the present invention can be used in various injection molding machines which involve a plasticization step of plasticizing a molding material fed into a heating cylinder by controlling rotation of a screw.

## Claims

1. A plasticization control method for an injection molding machine which has a plasticization step of performing a plasticization process for plasticizing a molding material fed into a heating cylinder by controlling rotation of a screw inserted into the heating cylinder and which performs molding by injecting the plasticized molten resin to fill a predetermined mold assembly by controlling advancement of the screw,
the plasticization control method being **characterized by** comprising:
setting at least a torque target value for screw rotational torque and an upper limit value for screw rotational speed beforehand as molding conditions; and
controlling the rotation of the screw during the plasticization process while performing preferential control on the torque target value.

2. The plasticization control method for an injection molding machine according to claim 1, wherein the molding material contains a powdery resin material.

3. The plasticization control method for an injection molding machine according to claim 1 or 2, wherein a rotation state of the screw is monitored when the screw rotates in the plasticization step, and, when the screw suffers a rotation anomaly, an error process is performed.

4. The plasticization control method for an injection molding machine according to claim 3, wherein the rotation anomaly includes a state in which the screw rotational speed is lower than a lower limit value set for the screw rotational speed.

5. A plasticization control apparatus for an injection molding machine including a molding machine controller which performs a plasticization process for plasticizing a molding material fed into a heating cylinder by controlling rotation of a screw inserted into the heating cylinder and which performs molding by injecting the plasticized molten resin to fill a predetermined mold assembly by controlling advancement of the screw,
the plasticization control apparatus being **characterized by** including the molding machine controller which comprises:
a molding condition setting function section which sets at least a torque target value for screw rotational torque and an upper limit value for screw rotational speed as molding conditions; and
a plasticization control function section which controls the rotation of the screw during the plasticization process while performing preferential control on the torque target value.

6. The plasticization control apparatus for an injection molding machine according to claim 5, wherein the molding machine controller includes a display and a plasticization state display function section which causes the display to graphically display, by a graphic display section, data representing changes in at least screw position during the plasticization process.

7. The plasticization control apparatus for an injection molding machine according to claim 5, wherein the molding machine controller includes a display and a plasticization state display function section which causes the display to graphically display, by a graphic display section, data representing changes in at least screw rotational torque during the plasticization process.

8. The plasticization control apparatus for an injection molding machine according to claim 5, wherein the molding machine controller includes a display and a plasticization state display function section which causes the display to graphically display, by a graphic display section, data representing changes in at least screw rotational speed during the plasticization process.

9. The plasticization control apparatus for an injection molding machine according to claim 5, wherein the molding machine controller includes a display and a plasticization state display function section which causes the display to graphically display, by a graphic display section, data representing changes in two or more physical quantities selected from at least screw position, screw rotational torque, and screw rotational speed during the plasticization process.

10. The plasticization control apparatus for an injection molding machine according to claim 6, wherein the molding machine controller includes a graphic display changing function section which operates the plasticization state display function section and a normal display function section selectively through switching, wherein the normal display function section graphically displays, by a normal waveform display section, data representing changes in one or two or more physical quantities selected from at least injection speed, injection pressure, and mold assembly parting opening amount during the molding.

11. 12. The plasticization control apparatus for an injection molding machine according to claim 6, wherein the molding machine controller includes a graphic display changing function section which simultaneously operates the plasticization state display function section and a normal display function section, wherein the normal display function section graphically displays, by a normal waveform display section, data representing changes in one or two or more physical quantities selected from at least injection speed, injection pressure, and mold assembly parting opening amount during the molding.
